# EUROPÄISCHE PATENTANMELDUNG

(11) **EP 0 694 352 A1**
(43) Veröffentlichungstag der Anmeldung: **31.01.1996**
(21) Anmeldenummer: 95111361.2
(22) Anmeldetag: 20.07.1995
(51) Int. Cl.: B21D 53/04

(54) **Verfahren zur Herstellung von Hohlkörperstrukturen aus Blechen**

(30) Priorität: 22.07.1994 DE 4426097
(71) Anmelder: Stahlwerke Bremen GmbH, D-28237 Bremen (DE)
(72) Erfinder: Breidohr, Bernhard, Dr., D-27721 Ritterhude (DE)
(74) Vertreter: Eisenführ, Speiser & Partner

(57) **Zusammenfassung**

Die Erfindung betrifft ein Verfahren zur Herstellung von Hohlkörperstrukturen aus insbesondere in Coilform vorliegenden Blechen
(B1-B4). Die Bleche (B1-B4) werden übereinandergelegt und in der Ebene der Bleche in vorgegebenen Abständen fest miteinander verbunden, insbesondere miteinander verschweißt. Anschließend werden die Zwischenräume zwischen den Blechen durch Innendruck zu Hohlräumen (10) ausgeformt.

## Beschreibung

Die Erfindung betrifft ein Verfahren zur Herstellung von Hohlkörperstrukturen aus Blechen, und insbesondere ein Verfahren zur Herstellung von Hohlkörperstrukturen unterschiedlicher Formgebung unter Verwendung mehrlagiger, beschichteter oder unbeschichteter Bleche, insbesondere Feinbleche in Coilform, als Ausgangsmaterial.

Üblicherweise wird die spanlose Formbildung von Hohlkörperstrukturen aus Feinblech, Spaltbändern usw. durch Biegen, Tiefziehen, Abkanten, Bördeln oder durch maschinelles Umformen erzeugt, teilweise in Ergänzung von Schweißvorgängen, wie z.B. bei der Rohrherstellung. Bei diesen Verfahren ist jedoch die Fertigform oft nur über mehrere aufeinanderfolgende Verarbeitungsstufen zu erhalten. Dabei ist es in den meisten Fällen erforderlich, daß das Ausgangsmaterial in einer bestimmten Form zugeschnitten und in geeigneter Weise aufbereitet werden muß, bevor es der eigentlichen Formgebung zugeführt werden kann. Eine Endformgebung von dünnwandigen Formkörperstrukturen direkt aus dem Halbzeug flacher metallischer Werkstoffe ohne zusätzliche (mechanische) Verformungseinrichtungen ist bei den genannten Verfahren nicht möglich. Oftmals ist nach der Formgebung, z.B. nach dem Schweißvorgang, eine aufwendige Nacharbeit notwendig, wie Entfernen von Grat, Aufbringen von Schutzschichten usw.

Aus DE-A1-42 09 584 ist ein Verfahren zur Herstellung von mehrfach S-förmig verlaufenden Wasserkanälen in Wärmetauschern bekannt. Hierzu werden miteinander verbundene Bleche durch abwechselnd von beiden Seiten angreifende Schieber in eine mehrfache S-Form gebogen. Innerhalb eines jeden Abschnittes sind die Bleche linienförmig miteinander verschweißt, und die zwischen Verbindungen befindlichen Zwischenräume werden dann durch ein Druckmittel anschließend zu Flüssigkeitskanälen aufgeweitet. Bei dieser bekannten Vorrichtung bzw. bei dem dort angewandten Verfahren geht es immer nur um die Herstellung von Werkstücken, nämlich S-förmigen Wärmetauschern, die vor dem Verformen in bestimmte Längen abgeschnitten sind. Es wird an Ort und Stelle das gewünschte Endprodukt in einer zusammenhängenden Schrittfolge hergestellt.

Der Erfindung liegtdeshalb die Aufgabe zugrunde, ein Verfahren zur Herstellung von Hohlkörperstrukturen zu entwickeln, bei dem die Endformgebung der Hohlkörperstruktur direkt aus dem Halbzeug flacher metallischer Werkstoffe, insbesondere Stahlcoils, ohne zusätzliche mechanische Verformungseinrichtungen erfolgen kann und aufwendige Vor- und Nacharbeiten entfallen.

Die Aufgabe wird erfindungsgemäß dadurch gelöst, daß mindestens zwei übereinanderliegende Bleche in durch die angestrebte Hohlkörperstruktur in der Ebene der Bleche vorgegebenen Abständen fest miteinander verbunden und die zwischen den Verbindungen abgetrennten, bahnenförmigen Zwischenräume durch Aufbringen von Innendruck zu Hohlräumen ausgeformt werden.

Der Hauptvorteil des erfindungsgemäßen Verfahrens besteht darin, daß lamellenartig aufgebaute Hohlkörper oder Hohlformen in Längsrichtung über beträchtliche Gesamtlängen erzeugt werden können, deren Biegewiderstand bzw. Biegesteifigkeit durch die Struktur der dünnen Blechwandstärken in Verbindung mit den ausgeformten Hohlräumen zum Tragen kommt. Ein weiterer Vorteil ist, daß je nach Bedarf und Anwendungsgebiet Ausgangsbleche unterschiedlicher Sorten, Dicke und Oberflächenveredelung miteinander kombiniert werden können. Mit dem erfindungsgemäßen Verfahren lassen sich ohne große technologische Umstellungen die unterschiedlichsten Strukturen herstellen. So ist es zum Beispiel möglich, sowohl einzelne dünnwandige Rohre, als auch Rohrsysteme aus mehreren nebeneinanderliegenden Rohren oder aus mindestens drei Schichten bestehende wabenförmige Hohlkörperstrukturen herzustellen.

Das Ausformen zu Hohlräumen der zwischen den festen Verbindungen abgetrennten Zwischenräume kann unmittelbar nach dem Verbinden der Bleche erfolgen. In diesem Fall wird man die Bleche vor dem Ausformen zweckmäßigerweise in die vorgesehenen Endlängen zertrennen und gegebenenfalls auch eine Teilung in Längsrichtung vorsehen, wenn z.B. Einzelrohre gefertigt werden sollen. Andererseits ist es jedoch auch ohne weiteres möglich und in vielen Fällen besonders vorteilhaft, die bereits miteinander verbundenen Bleche wiederum als Coils aufzuwickeln und so die spätere Hohlform gleichsam als Vormaterial bzw. Halbzeug vorbereitet zu haben, um daraus jederzeit und an jedem Ort die Gesamtlänge der Hohlkörperstruktur durch Innendruck auszuformen.

Im Gegensatz zur oben erwähnten DE-A1-42 09 584 geht es bei der vorliegenden Erfindung darum, aus in Coilform vorliegenden Blechen ein Zwischenprodukt in Form eines Halbzeuges herzustellen, das wiederum in quasi endloser Länge aufgewickelt und in dieser Form an einen meist getrennten Ort transportiert werden kann. Vor Ort wird dann das Zwischenprodukt abgewickelt und entweder in voller Länge (z.B. beim Verlegen von Rohren), oder in entsprechender Länge und/ oder Breite zugeschnitten, durch Aufbringen von Innendruck zu dem gewünschten Endprodukt fertiggestellt.

Der Innendruck zum Ausformen der durch die festen Verbindungen begrenzten Zwischenräume kann vorteilhaft durch Einführen von Fluiden in die Zwischenräume aufgebracht werden. Die Zwischenräume wölben sich dann ähnlich den Wülsten von Luftmatratzen beim Aufblasen auf und bilden zusammen mit den Blechwänden die gewünschte Hohlkörperstruktur. Der zum Ausformen notwendige Innendruck ist von der Wandstärke der verwendeten Bleche abhängig und dementsprechend einzustellen.

Vorteilhaft ist auch das Aufbringen des Innendruckes in die bahnenförmigen Zwischenräume durch Treibmittel von Schäumen, insbesondere dann, wenn die ausgeformten Hohlräume durch diese Schäume als wärme- und/oder schalldämmendes Material ausgefüllt werden, wie es in einer weiteren vorteilhaften Ausgestaltung der Erfindung vorgesehen ist. Neben wärme- und/oder schalldämmenden Materialien können die ausgeformten Hohlräume auch mit festigkeitssteigernden Materialien ausgefüllt werden, so daß die Hohlkörperstrukturen für die unterschiedlichsten Anwendungen angepaßt werden können.

Die vorgesehenen Verbindungen können von unterschiedlicher Art sein. Besonders vorteilhaft ist die Ausführung der Verbindungen als naht- oder punktförmige Schweißverbindungen oder als Klebeverbindungen. Bei den Schweißverbindungen wird das Laserstrahlschweißen wegen der damit erhaltenen sauberen Schweißnähte bevorzugt.

Die Verbindungen, die die äußeren Begrenzungen der Hohlkörperstruktur bilden, sind in jeden Fall nahtförmig ausgebildet, während die im Innenbereich zwischen den beiden äußeren Verbindungen liegenden Verbindungen in Abhängigkeit von dem Verwendungszweck der Hohlkörperstruktur punkt- oder linienförmig ausgebildet werden. Dabei können die Fügenähte oder -punkte im Innenbereich in beliebiger Richtung angeordnet sein, jedoch immer so, daß die Ausformbarkeit der zwischen ihnen liegenden, bahnenförmigen Zwischenräume gewährleistet bleibt. Das heißt, ein bestimmter Mindestabstand zwischen den Verbindungen, der gerade noch das Ausformen der Zwischenräume zu Hohlräumen erlaubt, ist einzuhalten. Ansonsten bestimmt sich der Abstand der Fügeverbindungen untereinander durch die angestrebte Hohlkörperstruktur selbst, das heißt, beispielsweise durch die vorgesehene Endbreite oder den vorgesehenen Enddurchmesser der auszuformenden Hohlräume. Dieser wiederum wird entsprechend dem Verwendungszweck der fertigen Hohlkörperstruktur variieren. Dabei muß selbstverständlich die Breitenverkleinerung durch die Ausformung berücksichtigt werden. Durch eine gezielte Auswahl der Blechbreite und ggf. auch der Blechlänge läßt sich die Fertigung der Hohlkörperstrukturen ohne viel Abfall optimieren. Andererseits können die bereits gefügten Bleche vor dem Ausformen sowohl in ihrer Längsrichtung als auch in ihrer Querrichtung geschnitten werden, so daß in jedem Fall die gewünschte Endform erhalten werden kann.

Die Fügeverbindungen im Innenbereich zwischen den äußeren Nähten können naht- oder punktförmig in Rasterform oder aber auch als parallele durchgehende Nähte ausgebildet sein, wobei die letztere Form insbesondere zur Ausbildung von Rohrsystemen oder Einzelrohren vorgesehen ist.

Um die Außenkontur der Hohlkörperstruktur zu begrenzen, kann die Formgebung, die Ausrichtung innerhalb einer Ebene bzw. die vorgegebene Maßhaltigkeit von Hohlkörperplatten innerhalb von Begrenzungswänden bzw.- flächen oder alternativ durch Richtwalzen der durch Innendruck ausgeformten mehrschichtigen Hohlkörperplatten erfolgen. Die Begrenzungswände können feststehend oder verschiebbar sein.

Nach dem erfindungsgemäßen Verfahren können sowohl zwei- als auch mehrlagige Hohlkörperstrukturen gefertigt werden. Bei den mehrlagigen Hohlkörperstrukturen hat sich ein wabenförmiger Aufbau als sehr vorteilhaft erwiesen, da dieser einen besonders biegesteifen Querschnitt ergibt. Für diese Struktur werden mindestens drei Bleche übereinander angeordnet und jeweils zwei aufeinanderfolgende Bleche in den durch die Endstruktur vorgegebenen Abständen miteinander fest verbunden und die Verbindungen der Bleche untereinander versetzt angeordnet.

Wie bereits weiter oben erwähnt wurde, können die längsbahnverbundenen und als Coils aufgewickelten Bleche vor der Ausformung der Zwischenräume an ihren Verwendungsort transportiert und erst unmittelbar vor ihrer Verwendung oder während der Verlegung ausgeformt werden. Dieses hat sich als besonders vorteilhaft bei der Verlegung von Rohrsystemen zur Fortleitung von Flüssigkeiten, die keine höheren Drücke erfordern, erwiesen. Die vorgefertigten Coils enthalten große unzerteilte Rohrlängen und können an Ort und Stelle zunächst als Band ausgerollt und anschließend durch Innendruck ausgeformt werden. Auf diese Weise lassen sich Rohrsysteme mit geringem Transport- und Verlegeaufwand über weite Entfernungen in Anpassung an die jeweiligen Bodenunebenheiten installieren, ohne daß dafür aufwendige Trageinrichtungen nötig sind.

Wie aus den obigen Ausführungen bereits hervorgeht, sind die durch das erfindungsgemäße Verfahren hergestellten Hohlkörperstrukturen für viele Anwendungen geeignet. Mögliche Anwendungen und Einsatzgebiete dieser Hohlkörperstrukturen sind beispielsweise geschlossene oder offene Spezialprofile mit hoher Steifigkeit, Rohrsysteme, Dach- und Wandverkleidungen mit integrierter Warmwassererzeugung, Wärmetauscher, Heizkörper, Kühleinrichtungen, Behälter- und Containerbau (wie mehrwandige Sicherheitsbehälter), Tragwerke, Strukturteile und Verkleidungen, Dichtungs- und Spannelemente, Leichtbauteile, crashrelevante Teile, (z.B. luftgefüllte Mehrkanalbleche), Wärme- und Kältedämmung oder dünnwandige Einzelrohre.

Der besondere Vorteil dieses Verfahrens besteht darin, leichte, dünnwandige, trag- und biegefeste Waben- bzw. Zellstrukturen in Längsrichtung in großer Stücklänge erzeugen zu können, ohne daß dafür mechanische Umformverfahren und Verbindungssysteme der vorgefertigten Bleche in Anspruch genommen werden müssen. Ein weiterer Vorteil besteht darin, innerhalb eines Coils, d. h. in kompakter Weise auf engstem Raum, die spätere Hohlform gleichsam als Vormaterial bzw. Halbzeug vorbereitet zu haben und daraus bei einfacher Transportmöglichkeit jederzeit an jedem Ort die Gesamtlänge der Hohlkörperstruktur durch Innendruck ausformen zu können. Die Hohlkörperstrukturen können in beliebiger Länge und Breite hergestellt werden.

Bei einer weiteren zweckmäßigen Variante der Erfindung werden zur Herstellung von Hohlkörperstrukturen alsaufgewickeltes Halbzeug aus in Coilform vorliegenden Blechen mindestens zwei übereinanderliegende Bleche in durch die angestrebte Hohlkörperstruktur in der Ebene der Bleche vorgegebenen Abständen fest miteinander verbunden, dann zu einem Coil aufgewickelt und anschließend zur Herstellung eines Endprodukts vor Ort abgewickelt und ggf. nach dem Ablängen und/oder Querteilen auf gewünschte Längen bzw. Breiten, in diesen vorbereiteten Hohlkörperstrukturen, die zwischen den Verbindungen abgetrennten, bahnenförmigen Zwischenräume durch Aufbringen von Innendruck zu Hohlräumen ausgeformt.

Nachfolgend wird die Erfindung anhand von Ausführungsbeispielen unter Bezugnahme auf die beigefügten Zeichnungen beschrieben.
- Fig. 1: zeigt eine schematische Darstellung der Fertigungsmöglichkeit von mehrlagigen Blechen mittels Laserschweißtechnik;
- Fig. 2: zeigt eine schematische Darstellung einer weiteren Fertigungsmöglichkeit von mehrlagigen Blechen mittels Klebtechnik;
- Fig. 3: zeigt mögliche Varianten der Verbindungen von mehrlagigen Blechen;
- Fig. 4a und 4b: zeigen die Anordnung der Schweißnähte für die wabenförmige Hohlkörperstruktur vor bzw. nach der Ausformung;
- Fig. 5a und 5b: zeigen ein Fertigungsbeispiel von zweilagigen Blechen vor bzw. nach der Formung;
- Fig. 6a und 6b: zeigen die Innendruckumformung mit Gesenk;
- Fig. 7a, 7b u. 7c: zeigen die Herstellung von Rohren aus geschweißtem Zweilagenblech; und
- Fig. 8: zeigt Beispiele für die Fertigung von Hohlprofilen durch längsgespaltenes Mehrlagenblech, links vor der Ausformung, rechts nach der Ausformung.

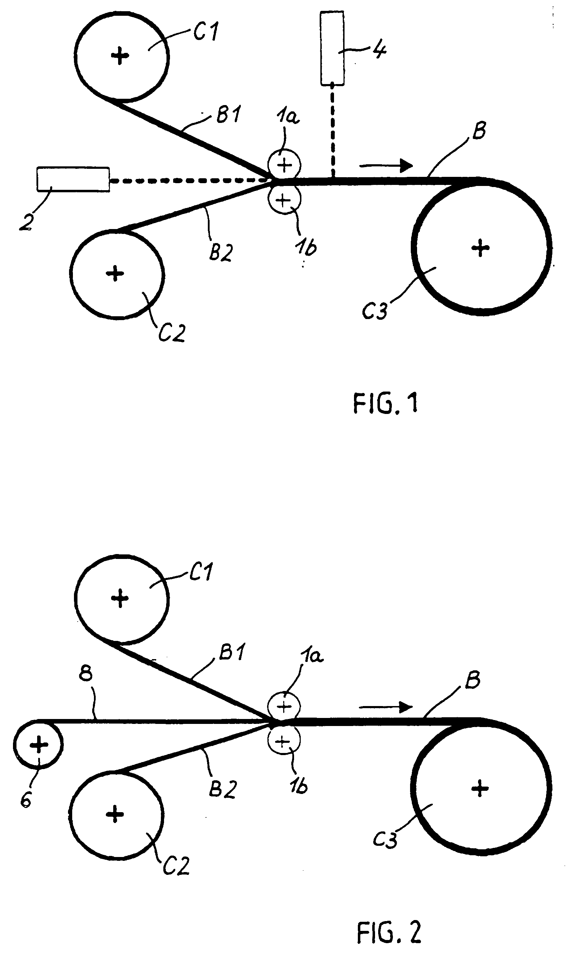

In den Figuren 1 und 2 sind Fertigungsmöglichkeiten für die Herstellung von Hohlkörperstrukturen aus zwei Feinblechen B1 und B2 schematisch dargestellt. Die Feinbleche B1 und B2 sind als Coils C1 bzw. C2 ausgebildet und auf jeweils einem Haspel aufgewickelt. Zur Verarbeitung werden die Coils C1, C2 über einen nicht näher dargestellten Antrieb von dem Haspel abgewickelt, und zwar in gegenläufiger Richtung mit im wesentlichen gleicher Geschwindigkeit. Die abgewickelten Feinbleche B1, B2 werden mittels eines Rollenpaares 1a, 1b zusammengeführt, so daß sie übereinander zu liegen kommen. Das Rollenpaar 1a, 1b dient zum einen der Führung und Ausrichtung und zum anderem dem Weitertransport der übereinanderliegenden Feinbleche B1, B2, ggf. auch zum Zusammenpressen derselben vor dem Verbinden miteinander.

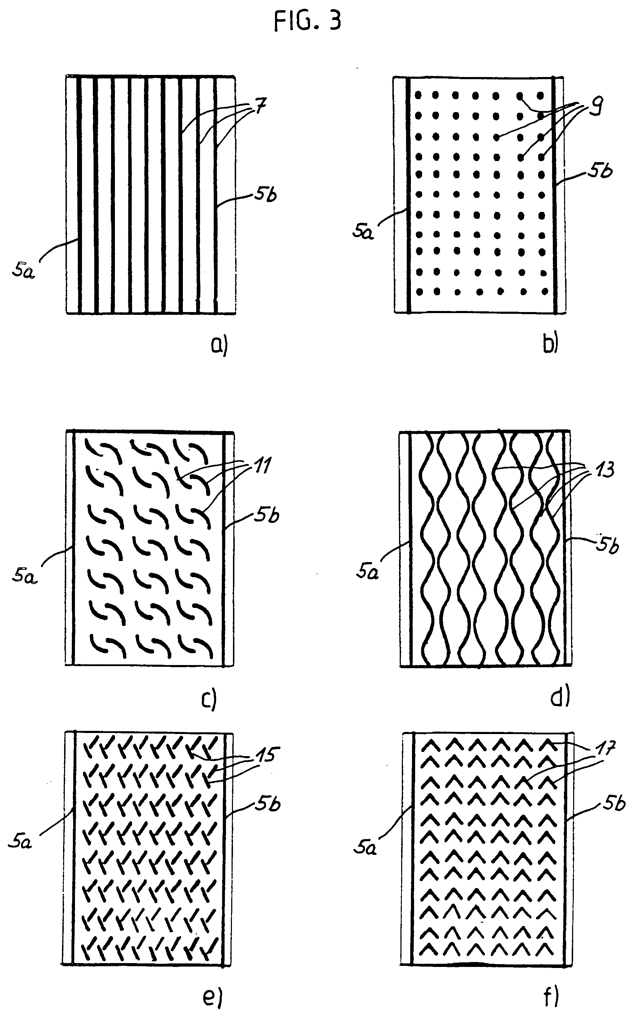

In Figur 1 werden die beiden Feinbleche B1, B2 nach dem Zusammenführen durch Laserstrahlschweißen in Längsrichtung der Feinbleche B1, B2 in vorgegebenen Abständen (siehe hierzu im einzelnen Fig. 3a-f) fest miteinander verbunden. Entsprechend der Anzahl der auszuführenden Verbindungen, d. h., je nach der Struktur des fertigen Hohlkörpergebildes, sind mehrere Laser- Schweißgeräte über die Blechbreite verteilt quer zur Transportrichtung der Feinbleche B1, B2 angeordnet. Dabei können die Laserstrahlen aus Lasern 2 auf die Feinbleche B1, B2 aufgebracht werden, die sich in einer ersten Position mittig von den beiden Coils C1, C2 befinden (es ist nur eines der Laser dargestellt), so daß die Laserstrahlen direkt vor den beiden Rollen 1a, 1b auf die zusammengeführten Bleche B1, B2 treffen und diese miteinander fest verbinden.

In einer anderen Variante ist es jedoch auch möglich, Laser-Schweißgeräte 4 in einer zweiten Position anzuordnen, die sich hinter dem Rollenpaar 1a, 1b im Abstand über den zusammengeführten Feinblechen B1, B2 befindet. Anstelle von Laserstrahlschweißen ist auch Widerstandsschweißen oder Löten möglich.

Nach der Ausführung der Verbindungen durch Fügenähte oder -punkte wird das fertige Blech B auf einem Haspel erneut als Coil C3 aufgewickelt, um als Vormaterial oder Halbzeug für eine spätere, an einem entfernten Ort zu verwendende Hohlkörperstruktur, wie z.B. ein zu verlegendes Rohrsystem, zu Verfügung zu stehen.

Anstelle der Aufwicklung als Coil C3 kann jedoch gleich das Ausformen der zwischen den Fügenähten und/oder Fügepunkten ausgebildeten Zwischenräume als Hohlräume durch Aufbringen von Innendruck durch geeignete Mittel, die hier nicht dargestellt sind, durchgeführt werden. Dabei ist es zweckmäßig, die Bleche vor dem Ausformen durch geeignete und an sich bekannte Schneidwerkzeuge in die vorgesehenen Längen zu zertrennen. Das Trennen kann sowohl in Längsrichtung der Bleche als auch in deren Querrichtung erfolgen. Auch ist es möglich, in besonders gelagerten Fällen die Verbindungen nicht in Längsrichtung der Bleche auszuführen, sondern in deren Querrichtung. Dementsprechend verändert müssen dann selbstverständlich auch die Schweißvorrichtungen angeordnet sein.

In Figur 2 ist eine weitere Möglichkeit der Herstellung der Verbindungen zwischen den beiden Feinblechen B1, B2 schematisch dargestellt. Die in dieser Figur dargestellte Vorrichtung unterscheidet sich von der in Figur 1 dadurch, daß anstelle des Lasers 2 in der ersten Position zwei oder mehrere quer zur Blechlaufrichtung nebeneinander angeordnete Rollen 6 mit beidseitig klebendem Klebstoffband 8 vorgesehen sind. In Figur 2 ist nur eine der Klebstoffbandrollen 6 zu sehen. Die Klebstoffbänder 8 werden vor dem Rollenpaar 1a, 1b in den vorgegebenen Abständen zwischen die Feinbleche B1, B2 eingebracht, zwischen den Rollen 1a, 1b an die Innenseite der Feinbleche B1, B2 gepreßt und dadurch eine feste Klebeverbindung zwischen diesen hergestellt. Gegebenenfalls sind zusätzliche Vorrichtungen zur Ablösung von Schutzschichten auf dem Klebstoffband 8 vorzusehen. Auch hier ist das erneute Aufwickeln des fertigen Bleches B als Coil C3 auf einem Haspel durch einen nicht dargestellten Antrieb vorgesehen. Nicht dargestellt, jedoch auch hier möglich, ist das Ausformen der zwischen den festen Verbindungen der Blechlagen ausgebildeten Zwischenräume zu Hohlräumen durch Aufbringen von Innendruck anstelle der Aufwicklung als Coil C3.

Die Innendruckausformung kann z.B. pneumatisch oder hydraulisch ausgeführt werden. Etwa derart, wie die Wulstbereiche von Luftmatratzen "aufgeblasen" werden, wölben sich die zwischen den Verbindungen ausgebildeten Zwischenräume, wobei die Formgebung bzw. Formbegrenzung durch Begrenzungswände oder - flächen erfolgen kann.

Daneben kann es auch vorteilhaft sein, den zur Ausformung der Hohlräume erforderlichen Innendruck durch das Treibmittel von Schäumen aufzubringen, die nach der Aushärtung als wärme- und/oder schalldämmendes und/oder festigkeitserhöhendes Mittel in den Hohlräumen verbleiben.

In Figur 3 sind einige Ausführungsbeispiele für Verbindungen der Bleche dargestellt. Dabei sind die äußeren Verbindungen, jeweils bezeichnet mit 5a, 5b, grundsätzlich als durchgehende Verbindungsnähte ausgebildet. In der Abbildung a) der Figur 3 sind die Verbindungen als durchgehende parallele Nähte 7 ausgeführt. Diese Ausführungsform ist besonders zur Herstellung von Rohrsystemen oder auch zur Herstellung von Einzelrohren geeignet. Die Abstände der Nähte werden entsprechend den gewünschten Rohrdurchmessern festgelegt, wobei sie entsprechend der Endformgebung etwas größer als der gewünschte Durchmesser sein müssen.

Wenn die Verbindungen im Innenbereich zwischen den äußeren Fügenähten 5a, 5b nicht durchgehend sein müssen, bietet sich die in der Abb. b) der Figur 3 dargestellte Lösung an. In diesem Beispiel werden die Verbindungen innerhalb der äußeren Fügenähte 5a, 5b als Fügepunkte 9 ausgebildet.

Weitere Beispiele sind in den Abbildungen c) bis f) der Figur 3 dargestellt. In Abbildung c) sind bogenförmige Verbindungsnähte 11 ausgeführt, während in der Abbildung d) wellenförmige Verbindungsnähte 13 vorgesehen sind. In den letzten beiden Abbildungen e) und f) sind die Verbindungsnähte als versetzte Linien 15 bzw. winkelförmige Linien 17 ausgeführt. Die zuletzt genannten Ausführungen sind besonders zur Ausbildung von Hohlkörperstrukturen für bestimmte Anwendungsbereiche geeignet. So werden z.B. durch die wellenförmigen Verbindungsnähte 13 nach der Ausformung der dazwischen verbleibenden Zwischenräume zu Hohlräumen wellenförmige Leitsysteme erhalten, die eine längere Aufenthaltszeit des durch sie strömenden Mediums ermöglichen.

Die Abbildungen in Figur 3 stellen die möglichen Ausführungen selbstverständlich nicht erschöpfend dar, sondern es sind durchaus weitere Varianten ausführbar.

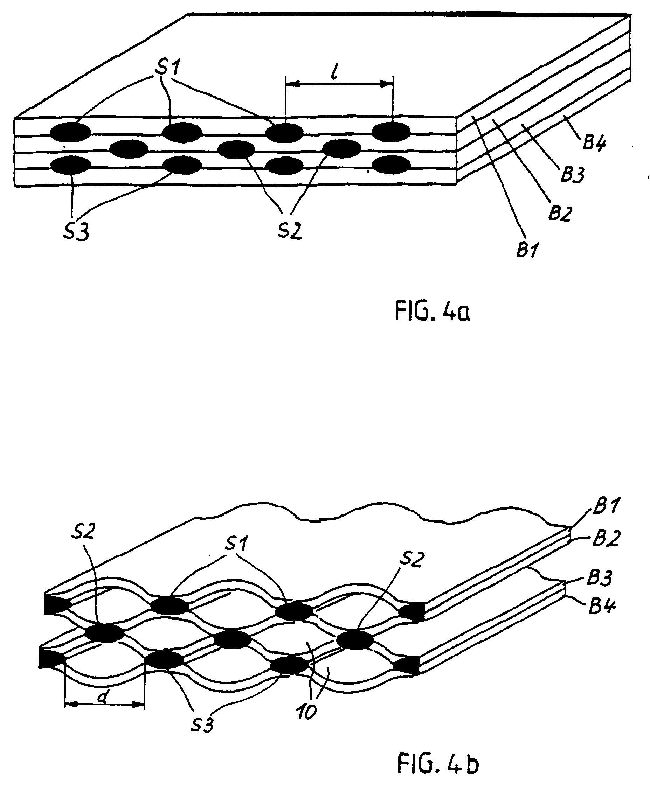

Die Figuren 4a und 4b zeigen die Anordnung von Schweißnähten für die Ausbildung von wabenförmigen Hohlkörperstrukturen. Die Figur 4a zeigt die Anordnung der Schweißnähte vor der Ausformung, während die Figur 4b die Anordnung der Schweißnähte nach der Ausformung der Zwischenräume zu Hohlräumen zeigt. In diesem Beispiel sind Bleche B1, B2, B3 und B4 übereinander angeordnet und haben jeweils gleiche Dicke. Es können jedoch auch ebensogut Bleche unterschiedlicher Dicke verwendet werden. So kann es z.B. vorteilhaft sein, die Außenbleche B1 und B4 dicker auszuwählen als die Innenbleche B2 und B3 oder diese mit einer Oberflächenbeschichtung zu versehen. Wie aus der Abbildung ersichtlich ist, sind die Schweißnähte S1 zwischen den Blechen B1, B2 in einem durch die gewünschte Breite d der Hohlräume (Fig. 4b) vorgegebenen Abstand l angeordnet. Die Verbindungsschweißnähte S2 der Bleche B2 und B3 sind ebenfalls in dem vorgegebenen Abstand l nebeneinander angeordnet, jedoch in Bezug auf die Verbindungsschweißnähte S1 der Bleche B1 und B2 in etwa mittig versetzt zu diesen. Die Verbindungsschweißnähte S3 zwischen den Blechen B3 und B4 sind wiederum mittig versetzt zu den Verbindungsschweißnähten S2 zwischen den Blechen B2 und B3 und liegen damit auf einer Linie mit den Verbindungsschweißnähten S1 der Bleche B1 und B2.

Nach dem Ausformen des zwischen den Verbindungsschweißnähten S1, S2 und S3 verbleibenden Zwischenräume zu Hohlräumen 10 mit gewünschter Breite d durch Aufbringen von Innendruck entsteht die in Figur 4b dargestellte Wabenform. Anstelle der vier Bleche B1 bis B4 kann die Anzahl je nach gewünschter Dicke des Endproduktes erhöht oder auf drei Bleche verkleinert werden.

Zur Erhöhung der Festigkeit oder zur Verbesserung der wärme- und schalldämmenden Eigenschaften, wie es z.B. bei Wandverkleidungen wünschenswert ist, können die gemäß 4b ausgeformten Hohlkörperstrukturen in ihren Hohlräumen 10 mit festigkeitserhöhenden Materialien oder aber mit schal- und wärmedämmenden Materialien ausgefüllt werden. Besonders vorteilhaft ist es hier, wenn anstelle der Ausformung mittels eines Druckfluides, Schäume in die Zwischenräume geleitet werden, deren Treibmittel den für die Ausformung der Zwischenräume zu Hohlräumen notwendigen Innendruck auf die Innenwandung der Zwischenräume aufbringen, wobei der Schaum nach dem Aushärten als wärme- und schalldämmendes und/oder stabilisierendes Mittel wirkt.

Die Mittel zum Aufbringen des Innendruckes, wie z.B. das Einbringen von flüssigen oder gasförmigen Medien unter entsprechendem Druck in die Zwischenräume oder von Schäumen, wird hier nicht gesondert dargestellt, da diese an sich allgemein bekannt sind.

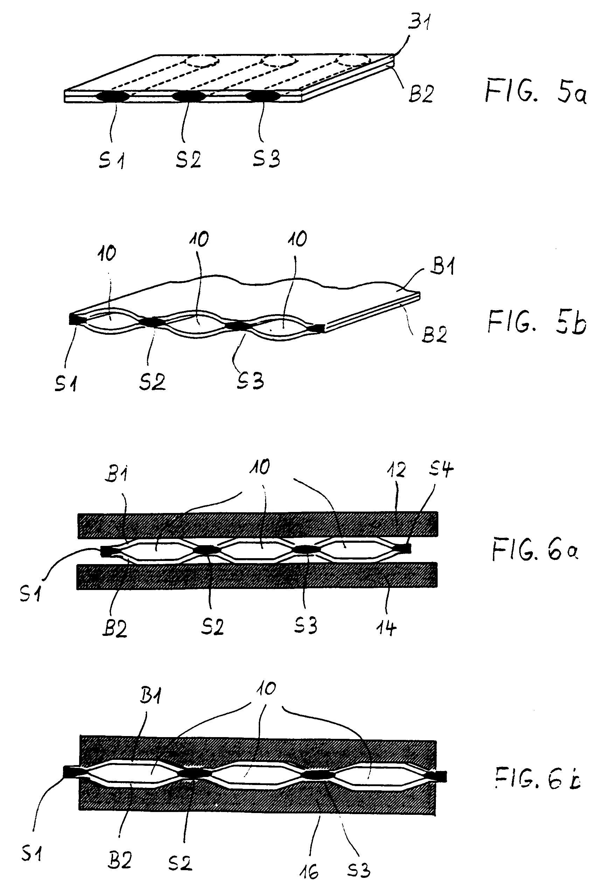

Die Innendruckausformung kann, wie in Figur 4b dargestellt ist, ohne äußere Begrenzung an den äußeren Blechen durchgeführt werden oder aber, wie in den Figuren 6a und 6b gezeigt ist, zur Begrenzung der äußeren Form mit Gesenk ausgeführt werden. Die Innendruckverformung innerhalb einer Form 16 (Figur 6b) bzw. mit einer Flächenbegrenzung 12, 14 (Figur 6a) kann soweit gehen, daß nicht nur eine Biegeverfestigung des Werkstoffes erfolgt, sondern sogar eine Wanddickendverringerung entsprechend einer Streckziehverformung und daraus resultierend eine Festigung eintritt, die zu einer besonderen Werkstoffversteifung bzw. Biegefestigkeit führt.

In den Fig. 6a und 6b ist die Ausformung einer zweischichtigen Hohlkörperstruktur, bestehend aus den Blechen B1 und B2, dargestellt. Die begrenzende Form besteht in Fig. 6a aus einer unteren beweglichen Platte 14 und einer oberen beweglichen Platte 12. Die Platten 12, 14 können entsprechend der gewünschten Dicke der fertigen Hohlkörperstruktur in ihrem Abstand zueinander variiert und anschließend im gewünschten Abstand fixiert werden.

Die Begrenzungsform nach Fig. 6b ist als feststehende Form 16 mit geformten Hohlräumen ausgebildet, mit der Hohlkörperstrukturen gleicher Dicke hergestellt werden können. Die Form der Hohlräume in der Form 16 entspricht in Breite und Höhe den gewünschten auszubildenden Hohlräumen 10 zwischen den Blechen B1 und B2. Die Bleche B1, B2 werden durch die Schweißnähte S1, S2 und S3 während der Formgebung in der Form 16 gehalten.

Wie aus den Figuren 4b, 5b und 6a bzw. 6b sehr gut ersichtlich ist, können die bahnförmigen Zwischenräume zwischen den Verbindungen entweder rund oder halbrund oder aber flach ausgeformt werden. Somit sind vielfältige Formen der Hohlkörperstrukturen mit ein und derselben Technik auf sehr einfache Art möglich. Wenn zum Beispiel, wie es in Figur 6a dargestellt ist, zur äußeren Formbegrenzung zwei gegeneinander verschiebbare Platten 12, 14 verwendet werden, kann der Durchmesser und die Höhe der auszubildenden Hohlräume in bestimmten Grenzen stufenlos eingestellt werden.

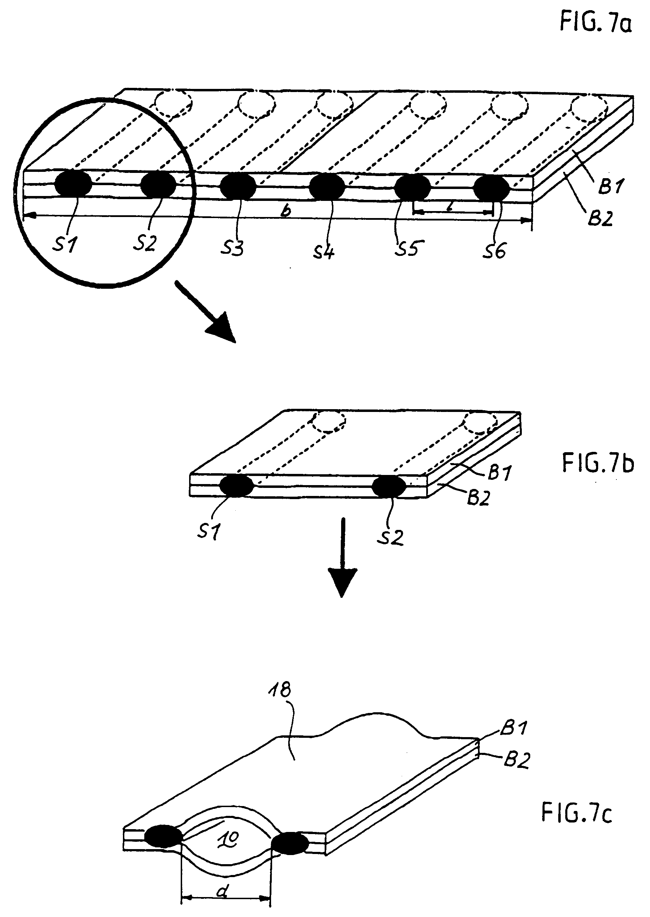

Bei der Herstellung von Rohrsystemen oder Einzelrohren, wie es in den Figuren 5a, 5b sowie 7a bis 7c dargestellt ist, erfolgt die Innendruckumformung ohne Gesenk, d. h., ohne äußere Begrenzungen.

Gemäß Figur 5a wurden zwei Bleche B1, B2 mit in Längsrichtung parallel verlaufenden, gleichmäßig beabstandeten Schweißnähten S1, S2, S3 versehen. Der Abstand der Schweißnähte S1, S2, S3 untereinander wird durch den gewünschten Durchmesser der Rohre des Rohrsystems bestimmt. Die Bleche B1, B2 sind bereits in der Länge entsprechend der gewünschten Hohlkörperstruktur zugeschnitten. Nach dem Ausformen der Hohlräume 10 durch Aufbringen von Innendruck hat man ein Rohrleitungssystem mit drei Rohren erhalten (Fig. 5b). Durch Variation der Längen- und Breiten der verwendeten Bleche B1, B2 und des Abstandes der Schweißnähte S1, S2, S3 ....Sn lassen sich beliebige Rohrsysteme auf einfache Weise herstellen.

In den Figuren 7a bis 7c ist die Verarbeitung von geschweißtem Zweilagenblech zu Rohren dargestellt. Gemäß Figur 7a sind zwei Bleche B1, B2 gleicher Dicke mit einer Bandbreite b in gleichmäßigen, durch den späteren Rohrdurchmesser d (Fig. 7c) festgelegten Abständen in Längsrichtung der Bleche mit Schweißnähten S1, S2, S3, S4, S5, S6 versehen. Nach dem Längsverschweißen der Bleche B1 und B2 werden diese in Längsrichtung so geschnitten, daß jeweils innen von den Schneidkanten eine Schweißnaht S1 bzw. S2 vorhanden ist. Dabei sollte der Schnitt nicht unmittelbar neben der Schweißnaht erfolgen, sondern ein geringer Überstand gelassen werden, um ein Aufbersten der Schweißnaht während der Durchleitung von Medien durch das Rohr oder während des Ausformens zu verhindern.

In Fig. 7c ist das bereits durch Innendruck ausgeformte fertige Rohr 18 mit dem in Längsrichtung durch die Schweißnähte begrenzten Hohlraum 10 zu sehen.

Es versteht sich, daß die so hergestellten Rohre 18 nur für Anwendungsfälle geeignet sind, bei denen sie keinen großen Drücken ausgesetzt sind.

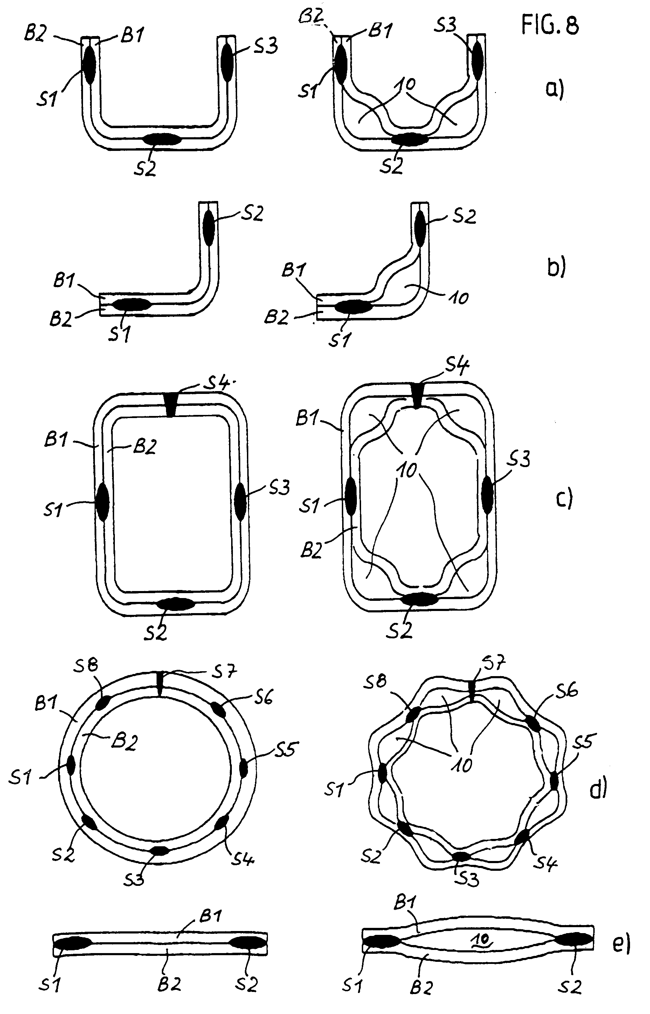

Neben den bisher dargestellten Ausführungsformen lassen sich auch gemäß Figur 8 bereits profilierte, gefügte Mehrlagenbleche durch Aufbringen von Innendruck in die durch die Verbindungen festgelegten Zwischenräume ausformen. Auch diese Ausführungsformen sind nur beispielhaft dargestellt. Wie ersichtlich ist, sind vielfältige Querschnittsformen möglich und können unterschiedlichen Anwendungsbedürfnissen angepaßt werden. Die Ausformung der zwischen den Verbindungen ausgebildeten Zwischenräume zu Hohlräumen 10 erfolgt wie zuvor beschrieben durch Aufbringen von Innendruck auf die Innenwände der Zwischenräume. Dabei sind wie zuvor die Bleche mit B1, B2, die Schweißnähte mit S1, S2, ....., S8 und die ausgeformten Hohlräume mit 10 bezeichnet.

Aus allen diesen Beispielen wird deutlich, daß sich mit dem erfindungsgemäßen Verfahren auf sehr einfache Weise Hohlkörperstrukturen mit vielfachen Variationsmöglichkeiten in Form, Größe, Festigkeit, Qualität und Eigenschaften herstellen lassen, so daß viele Anwendungsmöglichkeiten für die fertigen Produkte gegeben sind.

## Patentansprüche

1. Verfahren zur Herstellung von Hohlkörperstrukturen aus insbesondere in Coilform vorliegenden Blechen,
dadurch gekennzeichnet,
daß mindestens zweiübereinanderliegende Bleche (B1, B2) in durch die angestrebte Hohlkörperstruktur in der Ebene der Bleche vorgegebenen Abständen fest miteinander verbunden und zwischen den Verbindungen abgetrennte, bahnenförmige Zwischenräume durch Aufbringen von Innendruck zu Hohlräumen (10) ausgeformt werden.

2. Verfahren nach Anspruch 1,
dadurch gekennzeichnet, daß der Innendruck zum Ausformen der Zwischenräume durch ein Fluid aufgebracht wird.

3. Verfahren nach Anspruch 1,
dadurch gekennzeichnet, daß der Innendruck zum Ausformen der Zwischenräume durch Treibmittel von Schäumen aufgebracht wird.

4. Verfahren nach Anspruch 1,
dadurch gekennzeichnet, daß die Verbindungen, die die äußeren Begrenzungen der Hohlkörperstruktur bilden, als nahtförmige Verbindungen (5a, 5b) und die im Innenbereich zwischen den beiden äußeren Verbindungen (5a, 5b) liegenden Verbindungen als punkt- oder linienförmige Verbindungen erfolgen.

5. Verfahren nach einem der vorhergehenden Ansprüche,
dadurch gekennzeichnet, daß das Ausformen der Zwischenräume innerhalb von auf den äußeren Blechen anliegenden, äußeren Begrenzungen (12, 14; 16) erfolgt.

6. Verfahren nach einem der vorhergehenden Ansprüche,
dadurch gekennzeichnet, daß nach der Ausformung die Hohlkörperstruktur durch einen abschließenden Richtvorgang auf die gewünschte Maßtoleranz gebracht wird.

7. Verfahren nach einem der vorhergehenden Ansprüche,
dadurch gekennzeichnet, daß die ausgeformten Hohlräume (10) mit festigkeitssteigernden und/oder wärme-und schalldämmenden Materialien ausgefüllt werden.

8. Verfahren nach Anspruch 1 oder 4,
dadurch gekennzeichnet, daß die Verbindungen durch Schweißen, insbesondere Laserstrahlschweißen, hergestellt werden.

9. Verfahren nach Anspruch 1 oder 4,
dadurch gekennzeichnet, daß die Verbindungen durch Kleben hergestellt werden.

10. Verfahren nach einem der vorhergehenden Ansprüche,
dadurch gekennzeichnet, daß zur Erzeugung einer wabenförmigen Hohlstruktur mehr als zwei Bleche übereinander angeordnet und jeweils zwei benachbarte Bleche in den vorgegebenen Abständen miteinander verbunden werden, wobei die Verbindungen der Bleche untereinander versetzt angeordnet sind.

11. Verfahren nach einem der vorhergehenden Ansprüche,
dadurch gekennzeichnet, daß bezüglich der Ausgangsdicke, der Stahlsorte und der Oberflächenveredelung verschiedene Bleche als Ausgangsmaterialien benutzt werden.

12. Verfahren nach einem der vorhergehenden Ansprüche,
dadurch gekennzeichnet, daß die Bleche als Coils (C1, C2) aufgewickelte Feinbleche sind.

13. Verfahren nach Anspruch 12,
dadurch gekennzeichnet, daß aus den Coils (C1, C2) nach der Verbindung miteinander wiederum ein Coil (C3) aufgewickelt wird, wobei die Ausformung der Zwischenräume zu Hohlräumen (10) erst unmittelbar vor oder während der bestimmungsgemäßen Verwendung der Hohlkörperstruktur erfolgt.
